# EUROPÄISCHE PATENTANMELDUNG

(11) **EP 2 837 978 A1**
(43) Veröffentlichungstag der Anmeldung: **18.02.2015**
(21) Anmeldenummer: 13180063.3
(22) Anmeldetag: 12.08.2013
(51) Int. Cl.: G05B 19/042

(54) **Elektronisches Steuerungsgerät zur Steuerung einer Anlage**

(71) Anmelder: Siemens Aktiengesellschaft, 80333 München (DE)
(72) Erfinder: Hofmann, Ingmar Patrick, 90537 Feucht (DE)

(57) **Zusammenfassung**

Die vorliegende Erfindung betrifft ein Elektronisches Steuerungsgerät (100) zur Steuerung einer Anlage, wobei das elektronische Steuerungsgerät (100)
- eine Anzeigeeinrichtung (200), sowie
- eine Schnittstelle (130) zum Eingang eines elektrischen oder elektronischen Signals von einer Komponente der gesteuerten Anlage und/oder zur Ausgabe eines elektrischen oder elektronischen Signals an eine Komponente der gesteuerten Anlage umfasst,
wobei die Anzeigeeinrichtung (200) als elektronische, permanente Anzeigeeinrichtung (200) ausgebildet und eingerichtet ist, und
wobei das elektronische Steuerungsgerät (100) weiterhin
- zum Empfang und zur Speicherung einer von einer Projektierungseinrichtung zur Projektierung des Steuerungsgeräts und/oder der Anlage auf das elektronische Steuerungsgerät (100) übertragenen oder übertragbaren Komponenten-Information (210, 230, 235, 240, 245) bezüglich einer mit der Schnittstelle (130) zu verbindenden oder verbundenen Komponente der Anlage, und
- zur Anzeige dieser Komponenten-Information (210, 230, 235, 240, 245) auf der Anzeigeeinrichtung (200) ausgebildet und eingerichtet ist, und
wobei weiterhin bei einem Wegfall einer Anzeigen-Betriebsspannung zum Betrieb der Anzeigeeinrichtung (200) eine bei diesem Wegfall der Anzeigen-Betriebsspannung auf der Anzeigeeinrichtung (200) angezeigte Komponenten-Information (210, 230, 235, 240, 245) auch nach dem Wegfall der Anzeigen-Betriebsspannung angezeigt bleibt.

## Beschreibung

Die vorliegende Erfindung betrifft ein elektronisches Steuerungsgerät zur Steuerung einer Anlage, wobei das elektronische Steuerungsgerät
- eine Anzeigeeinrichtung, sowie
- eine Schnittstelle zum Eingang eines elektrischen oder elektronischen Signals von einer Komponente der gesteuerten Anlage und/oder zur Ausgabe eines elektrischen oder elektronischen Signals an eine Komponente der gesteuerten Anlage umfasst.

Derartige elektronische Steuerungsgeräte sind aus dem Stand der Technik bekannt. So offenbart beispielsweise das US-Patent US 6,816,919 B2 ein I/O-Modul für eine speicherprogrammierbare Steuerung, welches Anschlusskontakte zum Verbinden mit einem Maschineninterface zur Steuerung der Maschine durch die speicherprogrammierbare Steuerung aufweist. Die Steuerung der Maschine erfolgt dann über die speicherprogrammierbare Steuerung, welche auch Leuchtdioden zur Anzeige eines Operations-Zustands des CPU-Moduls aufweist. Das Patent EP 2035902 B1 offenbart eine speicherprogrammierbare Steuerung mit I/O-Modulen zur Ein- und Ausgabe von Signalen von bzw. an Sensoren oder Aktoren. Dabei ist die speicherprogrammierbare Steuerung für das zu steuernde System über eine Projektierungs-Software projektier- und parametrierbar.

Es ist ein Nachteil des genannten Standes der Technik, dass beispielsweise bei der Installation einer speicherprogrammierbaren Steuerung in einem Automatisierungssystem bzw. bei einer späteren Fehlersuche in diesem System mit Prüfgeräten und entsprechenden Beschaltungsplänen und den ursprünglichen Projektierungsdaten gearbeitet werden muss. Zwar sind aus dem Stand der Technik beispielsweise Ein-/Ausgabemodule für derartige speicherprogrammierbare Steuerungen bekannt, welche beispielsweise Leuchtdioden zum Anzeigen eines Ein- und/oder Ausgabezustandes aufweisen oder auch die Möglichkeit aufweisen, manuell beschriftete oder beschriftbare Papierstreifen mit Kurz-Infos an einem Ein- Ausgabemodul anzubringen, aber deren Aussagekraft ist teilweise gering beziehungsweise hängt z.B. von der Sorgfalt der Person ab, welche die Beschriftung vornimmt.

Es ist eine Aufgabe der vorliegenden Erfindung, die Installation, Prüfung, Überwachung und/oder Fehlersuche von Steuerungsmodulen in einem Automatisierungssystem zu verbessern oder zu vereinfachen.

Diese Aufgabe wird gelöst von einem elektronischen Steuerungsgerät mit den Merkmalen des Patentanspruchs 1.

Ein derartiges elektronisches Steuerungsgerät ist zur Steuerung einer Anlage bzw. eines Anlagenteils eingerichtet und ausgebildet und umfasst eine Anzeigeeinrichtung sowie eine Schnittstelle zum Eingang eines elektrischen oder elektronischen Signals von einer Komponente der gesteuerten Anlage und/oder zur Ausgabe eines elektrischen oder elektronischen Signals an eine Komponente der gesteuerten Anlage. Dabei ist die Anzeigeeinrichtung als eine elektronische, permanente Anzeigeeinrichtung ausgebildet und eingerichtet. Weiterhin ist das elektronische Steuerungsgerät zum Empfang und zur Speicherung einer von einer Projektierungseinrichtung zur Projektierung des Steuerungsgeräts und/oder der Anlage auf das elektronische Steuerungsgerät übertragenen oder übertragbaren Komponenten-Information bezüglich einer mit der Schnittstelle zu verbindenden oder verbundenen Komponente der Anlage eingerichtet und ausgebildet. Dabei ist das elektronische Steuerungsgerät zur Anzeige dieser Komponenten-Information auf der Anzeigeeinrichtung ausgebildet und eingerichtet, wobei bei einem Wegfall einer Anzeige-Betriebsspannung zum Betrieb der Anzeigeeinrichtung eine bei diesem Wegfall der Anzeigen-Betriebsspannung auf der Anzeigeeinrichtung angezeigte Komponenten-Information auch nach dem Wegfall der Anzeigen-Betriebsspannung angezeigt bleibt.

Ein derartiges elektronisches Steuerungsgerät weist die Möglichkeit auf, beispielsweise Informationen aus einer Anlagen-Projektierung über an dem Gerät angeschlossene Komponenten am elektronischen Steuerungsgerät selbst unmittelbar anzuzeigen. Weiterhin bleibt diese Information z.B. auch nach einem Ausschalten des elektronischen Geräts weiterhin angezeigt, zumindest für einen bestimmten Zeitraum. Damit kann ein Benutzer auch z.B. nach einem Abschalten des Geräts diese Komponenten-Information noch erkennen, was beispielsweise den Aufbau eines Automatisierungssystems oder z.B. eine Überwachung oder eine Fehlersuche weiter vereinfacht.

Insbesondere können beispielsweise Änderungen im Steuerungsgerät bzw. Automatisierungssystem oder bei dessen Projektierung durch Anzeige von aktualisierten Komponenten-Information direkt am Steuerungsgerät berücksichtigt werden. Auch dadurch wird eine Fehlersuche bzw. Installation vereinfacht, da auch aktualisierte Informationen bzw. ggf. immer die neuesten Informationen angezeigt werden können. Insbesondere vorteilhaft ist auch hier, dass auch diese aktualisierten Informationen nach einem Ausschalten oder bei einem Stromausfall oder ähnlichen Ereignissen angezeigt bleiben, zumindest für einen gewissen Zeitraum.

Ein elektronisches Steuerungsgerät kann dabei beispielsweise als eine speicherprogrammierbare Steuerung (SPS, PLC), einen so genannten Industrie-PC oder auch modularen Industrie-PC, eine modulare speicherprogrammierbare Steuerung oder auch als ein Modul für eine modulare speicherprogrammierbare Steuerung oder einen modularen Industrie-PC ausgebildet und eingerichtet sein. Solche Module können beispielsweise als ein Ein- und/oder Ausgabe-Modul, ein CPU-Modul, ein Kommunikationsmodul, ein Wegerfassungsmodul, eine Simulatorbaugruppe oder vergleichbare Module ausgebildet und eingerichtet sein.

Die Anlage kann beispielsweise ein zu steuerndes Gerät oder ein Roboter oder auch eine mehr- bzw. vielkomponentige Anlage sein. Eine Anlage kann beispielsweise optische, mechanische, elektromagnetische, elektronische oder ähnliche Sensoren umfassen. Weiterhin kann die Anlage Aktoren wie beispielsweise Motoren, Antriebe, Schalteinrichtungen oder Ähnliches umfassen. Weiterhin kann die Anlage auch weitere Steuerungseinrichtungen, Controller, Steuerungsmodule und/oder Computer- oder Datenverarbeitungseinrichtungen umfassen.

Neben der Schnittstelle zum Eingang und/oder zur Ausgabe eines elektronischen bzw. elektrischen Signals kann das elektronische Steuerungsgerät weitere derartige Schnittstellen umfassen, wobei diese weiteren Schnittstellen entsprechend der in dieser Beschreibung beschriebenen Schnittstelle des elektronischen Steuerungsgeräts ausgebildet und eingerichtet sein können.

Dabei kann die Schnittstelle beispielsweise zum drahtgebundenen Eingang und/oder zur drahtgebundenen Ausgabe eines Signals beispielsweise über einen Steckverbinder oder Ähnliches ausgebildet und eingerichtet sein. Weiterhin kann die Schnittstelle auch zum Eingang und/oder zur Ausgabe elektrischer oder elektronischer Signale über eine Drahtlosverbindung ausgebildet und eingerichtet sein.

Elektrische oder elektronische Signale können beispielsweise analoge oder digitale Spannungswerte oder auch eine Abfolge von digitalen oder analogen Spannungswerten sein. Weiterhin kann beispielsweise ein elektronisches Signal auch als ein oder mehrere digitale oder analog codierte Werte ausgebildet sein.

Über die Schnittstelle können digitale oder analoge Spannungs- oder Stromsignale unmittelbar ausgegeben oder empfangen werden. Weiterhin kann die Schnittstelle auch als eine parallele oder serielle Kommunikationsschnittstelle ausgebildet und eingerichtet sein.

Mit der Schnittstelle verbundene Komponenten der gesteuerten Anlagen können beispielsweise die genannten Sensoren oder Aktoren sein. Weiterhin kann die Komponente beispielsweise auch als eine Strom- und/oder Spannungsversorgung, ein weiteres Steuerungsgerät, ein Teil eines dezentralen Peripheriesystems, eine Kommunikationskomponente oder eine vergleichbar Komponente ausgebildet und eingerichtet sein.

Die elektronische permanente Anzeigeeinrichtung ist derart ausgebildet und eingerichtet, dass die darauf angezeigte Information elektronisch an sie übermittelt wird und dort auch nach Wegfall einer dafür notwendigen Betriebsspannung über eine gewisse Zeit, beispielsweise länger als eine Minute, länger als 30 Minuten, länger als eine Stunde, länger als zwölf Stunden, länger als ein Tag oder auch länger als eine Woche, angezeigt bleibt. In einer bevorzugten Ausgestaltung der elektronischen permanenten Anzeigeeinrichtung bleibt eine auf elektronischem Wege an die Anzeigeeinrichtung übermittelte und dort angezeigte Information auch nach Wegfall einer dafür notwendigen Betriebsspannung, oder auch vollständigen Trennung von einer Betriebsspannung, länger als eine Stunde, länger als ein Tag oder weiter bevorzugt, länger als eine Woche oder auch länger als ein Jahr, dort sicht- und erkennbar.

Eine solche elektronische, permanente Anzeigeeinrichtung kann beispielsweise auf der "elektronische Papier"-Technologie beruhen. Entsprechende Anzeigeeinrichtungen, auch unter Anderem als "E-Papier-Anzeigeeinrichtung", "E-Paper-Display", "ePapier-Display" oder "electronic-ink-Display" oder auch "eInk-Display" bezeichnet, lassen sich beispielsweise über eine Gyricon-, Elektrophorese-, bistabile LCD-, Elektrobenetzungs-, oder Mikro-mechanisch-gesteuerte-Interferenz-Modulations-Technologie auf elektronischem Wege Informationen anzeigen. Manche dieser Anzeigetechniken können dabei so ausgestaltet sein, dass Informationen auch ohne eine entsprechende Erhaltungsspannung über längere Zeit oder auch dauerhaft angezeigt bleiben. Die elektronische permanente Anzeigeeinrichtung kann beispielsweise gemäß einem so ausgestalteten E-Papier-Display ausgebildet und eingerichtet sein.

Eine Projektierungseinrichtung zur Projektierung des Steuerungsgeräts kann beispielsweise als ein oder mehrere Computer oder eine ähnliche Datenverarbeitungseinrichtung mit entsprechender Projektierungs-Software ausgestaltet sein, über welche sich das Steuerungsgerät und die daran angeschlossenen Komponenten oder weiteren Steuerungsgeräte einrichten und parametrieren lassen. Über eine solche Projektierungseinrichtung, ggf. auch als "Engineering-System" bezeichnet, können beispielsweise Steuerungsprogramme erstellt und auf das Steuerungsgerät übertragen werden, Komponentenanschlüsse eingestellt werden und/oder Verbindungsparameter, Komponenteneigenschaften, Kommunikationseigenschaften, Wertebereiche oder ähnliche Parameter und Informationen gesammelt und eingerichtet werden.

Der Empfang einer Komponenteninformation durch das Steuerungsgerät kann beispielsweise durch eine unmittelbare Übertragung dieser Information von der Projektierungseinrichtung zum Steuerungsgerät geschehen. Weiterhin kann der Empfang auch mittelbar erfolgen, so dass beispielsweise eine Komponenten-Information von der Projektierungseinrichtung zu einer weiteren Steuereinrichtung der Anlage und von dort zum elektronischen Steuerungsgerät übermittelt wird. Insbesondere kann beispielsweise bei einer modularen Speicherprogrammierbaren Steuerung vorgesehen sein, dass das elektronische Steuerungsgerät beispielsweise als ein Ein-Ausgabe-Modul oder Kommunikationsmodul ausgebildet ist. Die Komponenten-Information kann dann z.B. von der Projektierungseinrichtung zu einem zentralen Steuerungsmodul (z.B. "CPU-Modul") übertragen werden und von dort erst zum Ein-Ausgabe- oder Kommunikationsmodul. Dabei kann die entsprechende Kommunikation beispielsweise eine Kommunikation über ein Ethernet, ein ProfiNet-Netz, ein ProfiBus-Netz, einen Rückwandbus (z.B. der Speicherprogrammierbaren Steuerung) oder ähnliche Kommunikationspfade umfassen. Ebenso kann die Komponenten-Information über steckbare Speichermodule wie Compact-Flash-Cards oder USB-Sticks auf das Steuerungsgerät übertragen werden, oder über Funkschnittstellen wie WLAN, BlueTooth, ZigBee usw. Die Projektierungseinrichtung kann dabei auch als ein Tablet-PC oder Smartphone ausgebildet und eingerichtet sein.

Dabei kann beispielsweise vorgesehen sein, dass innerhalb der Projektierungseinrichtung ermittelt wird oder ermittelbar ist, welche Komponenten der gesteuerten Anlage mit dem entsprechende elektronischen Steuerungsgerät verbunden oder zu verbinden sind. Nachfolgend können entsprechende in der Projektierungseinrichtung gespeicherte oder von dieser ermittelte Informationen über diese Komponenten an das elektronische Steuerungsgerät übermittelt werden und dort gespeichert werden.

Durch eine Anzeige einer solchen Information auf der Anzeigeeinrichtung des Steuerungsgeräts kann ein Benutzer dann unmittelbar diese Information über die angeschlossene beziehungsweise anzuschließende Komponente erkennen.

Dies kann beispielsweise beim Einrichten eines entsprechenden Automatisierungssystems vorteilhaft sein, da diese Informationen beispielsweise bereits vor dem Anschluss der anzuschließenden Komponenten auf das Steuerungsgerät übertragen und dort angezeigt werden können und so einem Benutzer der korrekte Anschluss der entsprechenden Komponente erleichtert werden kann. Weiterhin kann auch bei der Fehlersuche innerhalb eines entsprechenden Automatisierungssystems von einem Benutzer beispielsweise anhand der Komponenten-Information erkannt werden, welche Komponente beziehungsweise welches Signal am elektronischen Steuerungsgerät angeschlossen sein sollte, und so eine korrekte Installation zu überprüft werden.

Zudem können bei Änderungen der Projektierung oder der angeschlossenen Komponenten die entsprechend neuen Komponenten-Informationen von der Projektierungseinrichtung an das Steuerungsgerät übermittelt und dort angezeigt werden, so dass ein Benutzer aktualisierte Informationen über die Ausbildung des Automatisierungssystems z.B. ohne Zuhilfenahme von Prüfgeräten direkt am Steuerungsgerät entnehmen kann.

Im Rahmen der vorliegenden Beschreibung wird unter der Anzeigen-Betriebsspannung diejenige Spannung verstanden, welche zum unmittelbaren Betrieb der Anzeigeeinrichtung notwendig ist. Der Wegfall der Anzeigen-Betriebsspannung kann beispielsweise ausgelöst werden durch ein Ausschalten des elektronischen Steuerungsgeräts, einen Stromausfall bei der Betriebsspannung des Steuerungsgeräts oder auch ein Trennen des elektronischen Steuerungsgeräts von einer Betriebsspannung. Der Wegfall der Anzeigen-Betriebsspannung kann auch durch ein gesondertes Ausschalten der Anzeige beispielsweise im Rahmen eines Stromspar- oder Standby-Modus erfolgen.

Dass die Komponenten-Information auf der Anzeigeeinrichtung auch nach dem Wegfall der Anzeigen-Betriebsspannung angezeigt bleibt, bedeutet, dass die Anzeigeeinrichtung derart ausgebildet und eingerichtet ist, dass diese Information zumindest über mehr als eine Minute, mehr als eine Stunde, mehr als ein Tag oder auch mehr als eine Woche auf der Anzeigeneinrichtung angezeigt bleibt.

Weiterhin kann das Steuerungsgerät ein Bedienelement umfassen, insbesondere ein Bedienelement für die Anzeigeeinrichtung umfassen, wobei das Steuerungsgerät weiterhin derart ausgebildet und eingerichtet ist, dass durch ein Betätigen des Bedienelements ein Umschalten von der Anzeige einer ersten Komponenten-, Schnittstellen- und/oder Geräte-Information auf der Anzeigeeinrichtung zur Anzeige einer zweiten Komponenten-, Schnittstellen- und/oder Geräte-Information auf der Anzeigeeinrichtung erfolgt.

Es können beispielsweise so genannte "Sichten" für die Anzeigeeinrichtung vorgesehen sein, wobei jede dieser "Sichten" durch eine bestimmte Zusammenstellung von Komponenten-, Schnittstellen- und/oder Geräteinformationen gebildet wird. Dabei kann eine solche Sicht beispielsweise z. B. bestimmten Verbindungselementen logisch und/oder lokal zugeordnete Schnittstellen- und/oder Komponenteninformationen umfassen. Weiterhin kann eine Sicht z.B. auch bestimmten Verbindungselementen zugeordnete Geräteinformationen umfassen.

Beispiele für solche Sichten sind: eine den jeweiligen Schnittstellen des Steuerungsgeräts zugeordnete "parametrierte Verdrahtungen", ein den jeweiligen Schnittstellen des Steuerungsgeräts jeweils zugeordnetes "Prinzipschaltbild", den jeweiligen Schnittstellen zugeordnete Symbole (z.B. SPS-Symbole) und aktuelle Ein- oder Ausgabewerte, den jeweiligen Schnittstellen bzw. daran angeschlossenen Komponenten zugeordnete Adressen und/oder ein entsprechender Signal-Werteverlauf, oder eine "Identifikations- und Wartungs-" Sicht. Weitere beispielhafte Ausgestaltungen dieser und weiterer "Sichten" sind im Rahmen der nachfolgenden Figurenbeschreibung dargestellt.

Vermittels des Bedienelements kann ein Benutzer des Steuerungsgeräts dann z.B. zwischen den verschiedenen vorgesehenen Sichten umschalten.

Das Steuerungsgerät kann weiterhin derart ausgebildet und eingerichtet sein, dass nach einem Wegfall der für einen Normal-Betrieb des Steuerungsgeräts erforderlichen Geräte-Betriebsspannung weiterhin vermittels des Bedienelements ein Umschalten von der Anzeige einer ersten Information gemäß der vorstehenden Beschreibung auf eine zweite Information gemäß der vorstehenden Beschreibung vermittels des Bedienelements zumindest für einen Zeitraum erfolgen kann.

Auf diese Weise kann auch beispielsweise in einem Stromlos-Zustand des Steuerungsgeräts weiterhin die zur Anzeige vorgesehene Information von einem Benutzer auch eingesehen werden. So kann beispielsweise bei einer Gerätestörung, einem Stromausfall oder auch bei einem vom Automatisierungssystem vollständig getrennten Gerät, immer noch die gespeicherte Information ausgegeben und so beispielsweise eine Fehlersuche oder auch eine Neuinstallation erleichtert werden.

Die vorgenannte Ausgestaltung kann beispielsweise vermittels eines Energiespeichers (z.B. eines Kondensators oder Akkus) bzw. einer Energiequelle (z.B. einer Batterie) im Steuerungsgerät erreicht werden, der bzw. die beispielsweise mit der Anzeigeeinrichtung und einer entsprechenden dafür vorgesehenen Display-Steuerung derart verbunden ist, dass auch weiterhin zumindest für einen gewissen Zeitraum mittels Display-steuerung und dem Bedienelement ein entsprechendes Umschalten von ausgegebener Information bzw. vorgegebenen Sichten möglich ist.

Im Steuerungsgerät kann weiterhin eine vorgegebene oder vorgebbare Ausschalt-Ansicht für die Anzeigeeinrichtung gespeichert sein, wobei das Steuerungsgerät weiterhin derart ausgebildet und eingerichtet sein kann, dass bei einem Wegfall einer Geräte-Betriebsspannung zum bestimmungsgemäßen oder regulären Betrieb des Steuerungsgeräts, die in der Ausschalt-Ansicht angegebenen Informationen auf der Anzeigeeinrichtung angezeigt werden.

Weiterhin kann vorgesehen sein, dass mehrere derartige vorgegebene oder vorgebbare Ausschaltansichten vorgesehen sind, wobei beispielsweise über das vorstehend genannte Bedienelement zwischen diesen Ausschalt-Ansichten umgeschaltet werden kann. Weiterhin kann auch eine bevorzugte Ausschalt-Ansicht gegeben sein, welche bei einem Geräte-Betriebsspannungsausfall angezeigt wird.

Solche Ausschalt-Ansichten können beispielsweise über die Projektierungseinrichtung erstellt oder ausgewählt werden. Weiterhin können eine oder mehrere Ausschalt-Ansichten auch im elektronischen Steuerungsgerät selbst vorgehalten und ggf. auch dort geändert werden.

Derartige Ausschalt-Ansichten können beispielsweise Informationen enthalten, die besonderes in einem Ausschaltzustand des Steuerungsgeräts relevant sind. Weiterhin können Ausschalt-Ansichten auch um bestimmte Informationen, wie beispielsweise die Anzeige von aktuell an einem Verbindungselement anliegenden Werten, reduziert sein, deren Anzeige besonders oder nur im Normal-Betriebszustand des Steuerungsgeräts sinnvoll ist. So können beispielsweise in einer Ausschalt-Ansicht in Bereichen der Anzeigeeinrichtung, in welchen normalerweise beispielsweise Eingangs-Spannungswerte angezeigt werden z.B. Fragezeichen oder andere Symbole angezeigt werden, um darzustellen, dass derzeit keine Eingangswerte feststellbar oder vorhanden sind. Bei entsprechenden Ausgangs-Schnittstellen können beispielsweise diejenigen Werte angezeigt werden, welche nach einem Einschalten bzw. erneuten Einschalten des Steuerungsgeräts über den Ausgang ausgegeben werden. Diese können beispielsweise besonders markiert, dargestellt oder ausgestaltet sein (z.B. unterstrichen, andersfarbig, kursiv, ...).

In einer vorteilhaften Ausgestaltung kann das Steuerungsgerät eine Spannungs-Überwachungs-Einrichtung zur Überwachung der Geräte-Betriebsspannung und/oder der Anzeigen-Betriebsspannung umfassen.

Insbesondere mittels einer Spannungs-Überwachungs-Einrichtung für die Geräte-Betriebsspannung kann erreicht werden, dass rechtzeitig ein kritischer Betriebsspannungs-Abfall beobachtbar ist und dann vor einem Wegfall beispielsweise auch der zum Betrieb der Anzeigeeinrichtung notwendigen Anzeigen-Betriebsspannung eine vorgegebene bzw. vorgebbare Ausschalt-Ansicht auf der Anzeigeeinrichtung dargestellt werden kann bzw. wird. Dabei kann beispielsweise die Spannungs-Überwachungseinrichtung oder auch eine Display-Steuerung für die Anzeigeeinrichtung derart ausgebildet und eingerichtet sein, dass auch bei einem spontanen Ausfall der Geräte-Betriebsspannung noch genug elektrische Energie intern vorgehalten ist, um zumindest das Erzeugen einer Ausschalt-Ansicht auf der Anzeigeeinrichtung zu ermöglichen.

Die vorstehend genannte Aufgabe wird auch gelöst durch ein Verfahren zum Betrieb eines elektronischen Steuerungsgeräts gemäß der vorliegenden Beschreibung, umfassend die folgenden Schritte:
- Empfangen und Speichern einer Komponenten-Information bezüglich einer mit der Schnittstelle des Steuerungsgeräts zu verbindenden oder verbundenen Komponente der gesteuerten Anlage von der Projektierungseinrichtung; und
- Anzeigen der Komponenten-Information auf der elektronischen Permanenten-Anzeigeeinrichtung.

Dadurch, dass auf der Anzeigeeinrichtung jeweils aktuelle Komponenten-Informationen über am Steuerungsgerät angeschlossenen Komponenten ausgebbar sind bzw. ausgegeben werden, wird einem Benutzer bei der Installation eines entsprechenden Steuerungsgeräts oder einer Anlage, oder auch bei einer entsprechenden Fehlersuche dabei, die Arbeit erleichtert.

In einer vorteilhaften Ausgestaltung kann das Verfahren weiterhin die folgenden Schritte umfassen:
- Anzeigen einer ersten Komponenten-Schnittstellen- und/oder Geräte-Information auf der Anzeigeeinrichtung,
- Betätigen eines Bedienelements des Steuerungsgeräts gemäß der vorstehenden Beschreibung,
- Anzeigen einer zweiten Komponenten-Schnittstellen-, oder Geräteinformation auf der Anzeigeeinrichtung.

Weiterhin kann das Steuerungsgerät zur Durchführung der folgenden Verfahrensschritte ausgebildet und eingerichtet sein:
- Feststellung eines Spannungsverlusts bei einer Geräte-Betriebsspannung zum bestimmungsgemäßen Betrieb des Steuerungsgeräts oder
- Feststellung eines Ausschalt-Signals bezüglich eines Ausschaltens des Steuerungsgeräts,
   und jeweils nachfolgend:
- Anzeige der Information einer gemäß einer im Steuerungsgerät gespeicherten Ausschalt-Ansicht auf der Anzeigevorrichtung.

Wie in der vorliegenden Beschreibung bereits an anderer Stelle erläutert, kann bei Feststellung eines Spannungsverlusts bei der Geräte-Betriebsspannung vorgesehen sein, dass rechtzeitig vor beispielsweise einem Stromlos-Zustand im Steuerungsgerät eine vorgesehene bzw. vorprojektierte Ausschalt-Ansicht auf der Anzeigeeinrichtung dargestellt wird.

In einer weiteren Ausgestaltung der Erfindung kann vorgesehen sein, dass beispielsweise bei einem Ausschalten des Geräts über einen entsprechenden Schalter, oder auch auf elektronische Art, das Steuerungsgerät derart ausgeschaltet wird, dass vor einem tatsächlichen Abschalten der Geräte-Betriebsspannung eine vorprojektierte bzw. vorgesehene Ausschalt-Sicht auf der Anzeigeeinrichtung des elektronischen Steuerungsgeräts angezeigt wird.

Zur Feststellung des Spannungsverlustes kann beispielsweise eine Spannungsüberwachungs-Einrichtung gemäß der vorliegenden Beschreibung vorgesehen sein. Weiterhin kann eine Energiequelle oder ein Energiespeicher-Einrichtung gemäß der vorgesehenen Beschreibung vorgesehen sein, um auch nach einem Ausschalten der Geräte-Betriebsspannung, bzw. einem entsprechenden Spannungsverlust, eine volle oder auch teilweise Funktionalität der Anzeigeeinrichtung zumindest für eine gewisse Zeit zu gewährleisten. Auch hier wird an anderen Stellen dieser Beschreibung dargestellte Ausgestaltungsmöglichkeiten diesbezüglich verwiesen.

Es kann weiterhin vorgesehen sein, dass vor der vorstehend genannten Feststellung eines Spannungsverlusts oder der Feststellung eines Ausschalt-Signals die folgenden Verfahrensschritte durchgeführt werden:
- Empfang von Daten bezüglich einer Ausschalt-Ansicht von der Projektierungseinrichtung oder Empfang einer Ausschalt-Ansicht von der Projektierungseinrichtung,
- Speichern der Ausschalt-Ansicht im Steuerungsgerät.

Allgemein kann eine in der vorliegenden Beschreibung genannte "Ansicht" oder auch "Ausschalt-Ansicht" beispielsweise durch eine Speicherung der konkret anzuzeigenden Daten im Steuerungsgerät vorgehalten werden. Weiterhin kann eine Ansicht auch durch eine prinzipielle Definition, welche Daten anzuzeigen sind, gespeichert sein, wobei dann beim tatsächlichen Anzeigen dieser Ansicht die entsprechenden Daten erst erzeugt, bezogen oder auch erfasst werden. Weiterhin kann eine der genannten Ansichten auch eine Kombination aus beiden Möglichkeiten umfassen.

Die vorliegende Erfindung wird nachfolgen beispielhaft mit Bezug auf die beiliegenden Figuren näher erläutert.

Es zeigen:
- Figur 1: eine Ein-Ausgabe-Baugruppe mit Darstellung einer den jeweiligen Anschlusskontakten der Baugruppe zugeordneten "parametrierten Verdrahtung";
- Figur 2: eine Ein-Ausgabe-Baugruppe mit Darstellung der den jeweiligen Anschlusskontakten der Baugruppe zugeordneten "Prinzipschaltbildern";
- Figur 3: eine Ein-Ausgabe-Baugruppe mit Darstellung der den jeweiligen Anschlusskontakten der Baugruppe zugeordneten "Symbole und Aktualwerten";
- Figur 4: eine Ein-Ausgabe-Baugruppe mit Darstellung der den jeweiligen Anschlusskontakten der Baugruppe zugeordneten "Adressen und Aktualwerten";
- Figur 5: eine Ein-Ausgabe-Baugruppe mit Darstellung von der Baugruppe zugeordneten "I&M-Daten" ("Identification and Maintenance");
- Figur 6: prinzipieller Aufbau einer beispielhaften Ein-Ausgabe-Baugruppe zur Darstellung von Informationen gemäß den Figuren 1 bis 5.

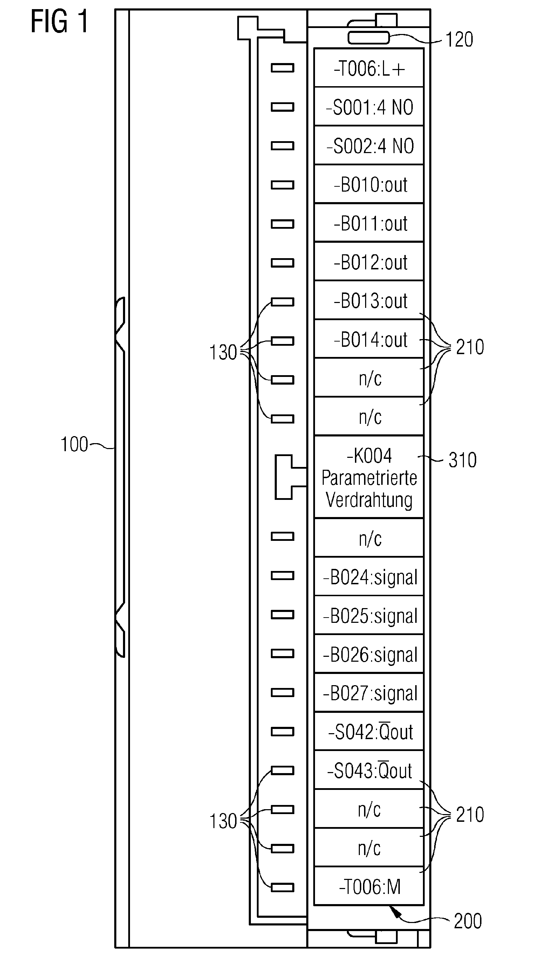

Figur 1 zeigt ein als Digitaleingabebaugruppe 100 ausgebildetes Ein-Ausgabe-Modul 100 für eine modulare Speicherprogrammierbare Steuerung. Das Modul 100 weist ein e-Paper-Display 200 auf. Dabei ist das e-Paper-Display 200 ein Beispiel für eine Anzeigeeinrichtung gemäß der vorliegenden Beschreibung, während das Ein-Ausgabe-Modul 100 ein Beispiel für ein elektronisches Steuerungsgerät gemäß der vorliegenden Beschreibung ist.

Das Ein-Ausgabe-Modul 100 weist zwanzig Anschlusskontakte 130 für Anschlussleitungen von/zu mit dem Ein-Ausgabe-Modul 100 verbundenen oder verbindbaren Sensoren, Aktoren oder ähnlichen Geräten oder Baugruppen auf. Diese sind in Fig. 1 als längliche Rechtecke dargestellt und aus ÜbersichtlichkeitsGründen nur teilweise bezeichnet. Auch die diesen Kontakten jeweils zugeordneten, auf dem Display 200 angezeigten Informationen gemäß der nachfolgenden Beschreibung sind aus Gründen der Übersichtlichkeit immer nur teilweise mit einer Bezeichnung versehen. Das Verständnis der Zeichnungen ergibt sich aber dennoch aus der entsprechenden Beschreibung.

Das e-Paper-Display 200 zeigt in Figur 1 eine sogenannte "parametrierte Verdrahtung" 210, 310 für die Anschlusskontakte 130 der Baugruppe 100. Das Display 200 zeigt im in Figur 1 dargestellten Beispiel an, welche Kontakte 130 der Eingabebaugruppe 100 mit welchen Ausgängen anderer automatisierungstechnischer Komponenten verbunden sind. Dabei wird neben jedem der Kontakte 130 eine zugeordnete "parametrierte Verdrahtungs"-Info 210 angezeigt. Verbundene oder gemäß einer Projektierung mit der Baugruppe 100 zu verbindende Komponenten werden dabei im in Figur 1 dargestellten Beispiel über die Verdrahtungs-Information 210 identifiziert. Das hat den Vorteil, dass der Anwender die Beschriftung beim Verdrahten der Baugruppe direkt von dieser ablesen kann. Diese Verdrahtungs-Information 210 umfasst ein Anlagenkennzeichen (AKZ) (z.B. "-B010" für "Bero #10") der angeschlossenen bzw. anzuschließenden Komponente, danach folgt - durch einen Doppelpunkt getrennt - eine sogenannte Klemmenbezeichnung der verbundenen bzw. zu verbindenden Baugruppe bzw. Komponente (z.B. "out"). Offene bzw. ungenutzte Anschlusskontakte 130 werden hier mit der Verdrahtungsinformation 210 "n/c" ("not connected") gekennzeichnet.

Weiterhin ist auf der Anzeigeeinrichtung 200 in einem ansonsten z.B. ungenutzten Mittenbereich ohne Anschlusskontakte 130 eine Beschreibungs-Information 310 über die "Parametrierte Vertdrahtungs"-Darstellung mit einem Titel für diese Darstellung sichtbar, sowie ein dem Modul 100 im Rahmen einer Projektierung zugeordnetes Anlagenkennzeichen (hier "-K004").

Weiterhin weist das in Figur 1 dargestellte Ein-Ausgabe-Modul 100 einen kleine Taster 120 oberhalb des e-Paper-Displays 200 auf. Mit ihm kann ein Anwender der Baugruppe 100 zwischen verschiedenen auf dem Display 200 anzeigbaren Darstellungen bzw. "Sichten" der Gerätedaten wechseln. Dabei wird der folgenden Beschreibung wird für solche verschiedenen Darstellungsmöglichkeiten bzw. Darstellungs-Typen allgemein der Begriff "Sicht" gebraucht.

Durch Druck auf diesen Taster 120 kann die Anzeige zum Beispiel zwischen der in Figur 1 dargestellten "parametrierten Verdrahtung" und anderen möglichen Sichten, wie z.B. einer "Prinzip-Schaltbild"-Darstellung, einer "Symbole und Aktualwerte"-Darstellung, einer "Adressen und Werteverlauf"-Darstellung und einer "I&M-Daten"-Darstellung wechseln. Auf diese genannten weiteren Sichten wird in Bezug auf die nachfolgenden Figuren noch näher eingegangen.

In einer ersten, z.B. etwas kostengünstigen Variante der Erfindung, bzw. der in den Figuren beispielhaft dargestellten der Ein-Ausgabe-Baugruppe 100, kann ein Anwender nur bei am Ein-Ausgabe-Modul 100 anliegender 24V Versorgungsspannung zwischen verschiedenen der vorstehend beispielhaft genannten Darstellungs-Typen wechseln. Bei dieser Variante bricht z.B. bei einem Spannungsausfall auch die interne Spannungsversorgung des e-Paper-Displays 200 zusammen und es bleibt die zuletzt gewählte Anzeige aufgrund der spezifischen Eigenschaften des e-Papers bestehen. Diese kann dann z.B. erst bei einer Spannungswiederkehr geändert werden.

In einer weiteren Variante der Erfindung, bzw. der in den Figuren beispielhaft dargestellten der Ein-Ausgabe-Baugruppe 100, kann vorgesehen sein, dass ein Anwender auch bei abgeklemmter Versorgungsspannung des Steuerungsgeräts / der Baugruppe 100 bzw. bei ausgebautem Steuerungsgerät / Baugruppe beispielsweise zwischen verschiedenen Sichten, beispielsweise den vorstehend beispielhaft genannten Sichten, wechseln kann. Beispielsweise in dieser weiteren Variante kann z.B. ein Energiespeicher (z.B. ein kleiner "Superkondensator" ("Gold Cap")) aufgeladen werden, solange eine Versorgungsspannung an dem Modul 100 anliegt. Das Laden des Energiespeichers, z.B. eines genannten "Gold Cap", erfolgt z.B. innerhalb weniger Sekunden.

Weiterhin kann bei dieser Variante vorgesehen sein, dass durch ein Drücken des Auswahltasters die e-Paper-Displayansteuerung mit der verbleibenden Hilfsspannung nur eine Auswahl aus allen möglichen Display-Typen bzw. Sichten des e-Paper-Displays durchschaltet. Dabei kann die Auswahl insbesondere so erfolgen, dass die Anzeige der entsprechenden Informationen auch ohne Versorgungsspannung am Steuerungsgerät / Modul 100 Sinn machen. Solche Informationen können beispielsweise eine Verdrahtung, ein Prinzipschaltbild, S7-Symbole oder ähnliches gemäß der vorliegenden Beschreibung sein. Eine Aktualwerte-Sicht gemäß der vorliegenden Beschreibung macht im hier beschriebenen Stromausfall-Fall möglicherweise weniger Sinn, da das Steuerungsgerät z.B. mit der Hilfsspannung nur einen Teil seiner Normalfunktionen ausführen kann.

Da e-Paper-Displays im Allgemeinen insbesondere nur dann, bzw. besonders dann, Strom verbrauchen, wenn ihre Darstellung geändert wird, reicht die Ladung des Kondensators in Verbindung mit z.B. einem leistungsschwachen Mikrocontroller zur Displayansteuerung aus, um die Anzeige auf dem e-Paper-Display 200 mit der Pufferspannung des Kondensators mehrmals umzuschalten. Statt des genannten Kondensators als Energiequelle sind auch Lösungen mit Akkumulatoren oder Primärzellen (z.B. Lithium-Knopfzellen) zur Hilfsstromstromversorgung möglich, während die Baugruppe 100 nicht am 24V-Netz hängt. Diese Lösungen erfordern möglicherweise gegenüber der genannten "Kondensator"-Variante etwas mehr Wartungsaufwand, da Akkumulatoren oder Knopfzellen häufig nach ca. zehn Jahren ausgetauscht werden sollten.

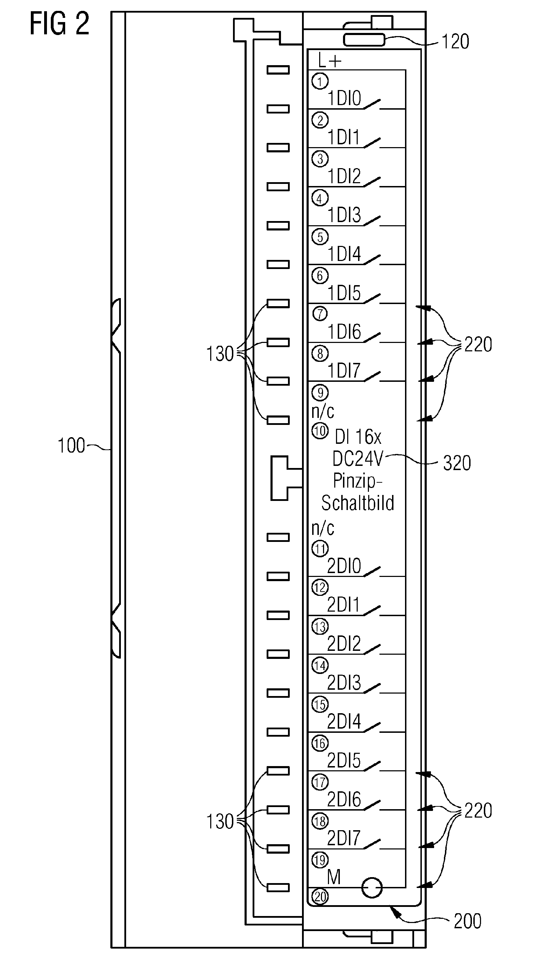

Figur 2 stellt einen weiteren möglichen Displayinhalt der e-Paper-Displays 200 der in Figur 1 dargestellten Ein-Ausgabe-Baugruppe 100 dar. Der in Figur 2 dargestellte Anwendungsfall ist insbesondere im ausgeschalteten Zustand der Baugruppe für den Inbetrieb- oder Instandsetzer von Interesse. So wie bereits beispielsweise bei heute erhältlichen Ein-AusgabeBaugruppen für modulare Speicherprogrammierbare Steuerungen aufgedruckt (z.B. auf der Innenseite einer Baugruppenabdeckung), zeigt das Display ein den jeweiligen Anschlusskontakten 130 der Baugruppe 100 zugeordnetes Prinzipschaltbild 220 jeweils neben dem entsprechenden Anschlusskontakt 130.

Unter anderem vorteilhaft ist diese Darstellung bei Geräten bzw. Baugruppen 100, die frei konfigurierbar sind. Die Funktionalität einer derartigen Baugruppe 100, deren Anschlüsse (z.B. sogenannte Anschlussklemmen) sich z.B. vermittels einer Projektierungs- oder Engineering-Software beispielsweise frei als Ein- oder Ausgänge konfigurieren lassen, lässt sich beispielsweise mit einem gemäß dem Stand der Technik bekannten, fest aufgedruckten Prinzipschaltbild nur sehr unübersichtlich abbilden. Hier kann vermittels der beschriebenen Ausgestaltung je nach gerade konfiguriertem Baugruppenzustand das aktuell korrekte Prinzipschaltbild darstellen. Dies hilft beim Vermeiden von Flüchtigkeitsfehlern beim Verschalten und kommt insbesondere auch weniger erfahrenen Anwendern zu Gute.

In einem Mittenbereich des Displays 200 wird auch beim in Figur 2 dargestellten Darstellung-Typ, bzw. der in Figur 2 dargestellten Sicht, wieder eine entsprechende Beschreibungsinformation 320 dargestellt, die einen Titel für die angezeigte Darstellung (hier "Prinzip-Schaltbild") sowie einen Kurznamen bzw. eine Kurzbeschreibung des Ein-Ausgabe-Moduls 100 (hier "DI 16x" und "DC24V") umfasst.

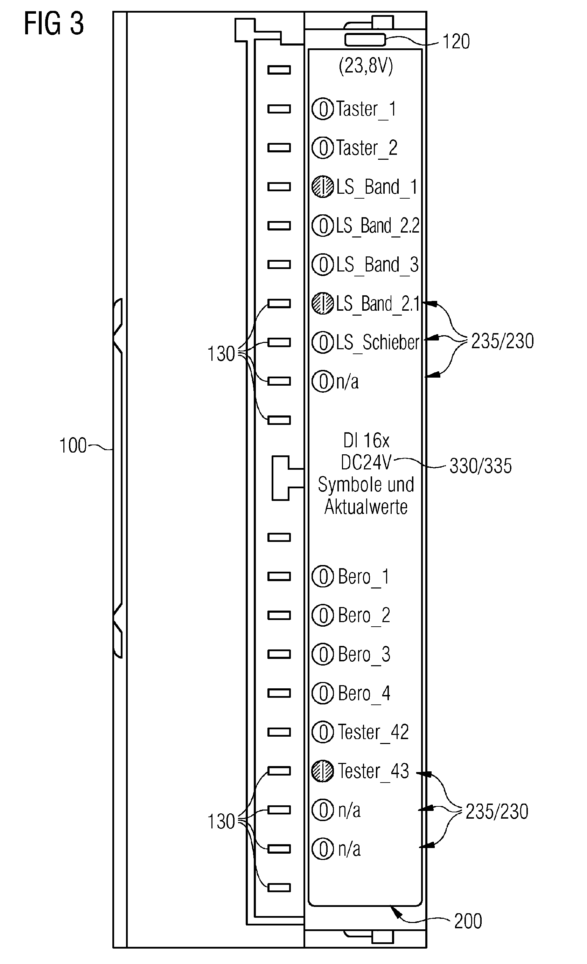

In Figur 3 ist ein weiterer Darstellungs-Typ für das e-Paper-Display der in den Figuren 1 und 2 dargestellten Ein-Ausgabe-Baugruppe 100 dargestellt. Auf der Anzeige 200 werden neben jedem Anschlusskontakte 130 konfigurierte bzw. konfigurierbare Symbole 230 für die dem jeweiligen Kontakt 130 zugeordneten Baugruppensignale bzw. -klemmen der daran angeschlossenen Baugruppen bzw. Klemmen dargestellt (z.B. "LS_Band_1", "Bero_1" oder "Taster_42"). Davor wird noch jeweils der am jeweiligen Anschlusskontakt 130 anliegenden Aktualwert 235 in digitaler Form (hell/"0" und dunkel/"1") dargestellt. Diese Sicht ist beispielsweise für einen Programmierer einer Projektierung bzw. eines Engineerings für ein AutomatisierungsSystem hilfreich und z.B. zum Kontrollieren, Testen und Debuggen von Steuerungsprogrammen für dieses AutomatisierungsSystem interessant. Die auf dem Display vor den S7 -Symbolen binär angezeigten Aktualwerte können z.B. sogenannte "Status-LEDs" zu Anschlusskontakten der Baugruppen gemäß dem Stand der Technik ersetzen, was z.B. die Anzahl der verbauten Einzelteile der Baugruppe reduziert.

In einem Mittenbereich des Displays 200 werden auch beim in Figur 3 dargestellten Darstellung-Typ wieder entsprechende Beschreibungsinformationen 330, 335 dargestellt, die einen Titel für die angezeigte Darstellung (hier "Symbole" 330 und "Aktualwerte" 335) sowie einen Kurznamen bzw. eine Kurzbeschreibung des Ein-Ausgabe-Moduls 100 (hier "DI 16x" und "DC24V") umfassen.

Bei Steuerungsgeräten mit analogen Signal-Ein- und/oder - Ausgängen (z.B. analoge Ein-Ausgabe-Module für eine Speicherprogrammierbare Steuerung) kann ein e-Paper-Display gemäß der vorliegenden Erfindung außerdem - anders als z.B. heute bekannte, sogenannte "Status-LEDs" - an einem oder mehreren Kontakten anliegende bzw. über diese ausgegebene Ströme und Spannungen unmittelbar als Zahlenwerte anzeigen. Dies kann dem Bediener einer entsprechenden Anlagen, z.B. einem Anlagenfahrer, Inbetrieb- und/oder Instandsetzer, die Kontrolle oder Fehlersuche vor Ort erleichtern. In vielen Fällen kann z.B. eine direkte Anzeige von Analogwerten eine Signalkontrolle mit Prüfspitzen eines Multimeters ersparen oder reduzieren. Eine Signalkontrolle mit Prüfspitzen eines Multimeters ist häufig nachteilig, da diese in der Regel beidhändig erfolgen muss, und der Techniker keine Hand mehr z.B. zum Notieren von Werten und ähnlichem frei hat. Durch die direkte Darstellung der Analogwerte hat ein Bediener eine oder beide Hände zum Arbeiten frei. Außerdem kann er z.B. mit den Prüfspitzen nicht mehr abrutschen oder auch aus Versehen die Signale einer falschen Klemme messen. Auch das Risiko, unbeabsichtigt einen Kurzschluss auszulösen (beispielsweise durch den Versuch, eine Spannung mit einem auf Strommessung eingestellten Multimeter zu messen) wird so reduziert.

Zu hohe oder zu niedrige Ein- und/oder Ausgabe-Werte an entspechenden Schnittstellen oder Kontakten können so von einem Benutzer z.B. einfacher erfasst werden. Ein weiterer Vorteil des Einsatzes eines e-Paper-Displays ist, dass auf dem e-Paper-Display jeweils zuletzt angezeigte Messwerte selbst z.B. nach einem Stromausfall oder einer elektrischen Zerstörung der Baugruppe auf dem e-Paper noch lesbar bleiben, was beispielsweise für die Ursachenermittlung nach Störungen oder Unfällen wertvoll sein kann. E-Paper ist bis zu einem gewissen Grad auch mechanischen Zerstörungen gegenüber unempfindlich - anders als bei einem LCD-Display bleibt es beispielsweise beim Durchstoßen mit einem scharfen Gegenstand noch teilweise funktionsfähig. Auch ist es unempfindlicher gegenüber Vibrationen.

Da Figur 3 beispielhaft eine Digital- und keine Analogbaugruppe dargestellt ist, wird das vorstehend genannte "Analog- wert-Darstellungs"-Feature nur durch die eingeklammerten "23,8V" 235 neben dem obersten Anschlusskontakt 130 angedeutet. Die dort angezeigte Spannung ist die über den obersten und untersten Kontakt 130 von der Baugruppe 100 selbst gemessene 24V-Versorgungsspannung (s. auch "Prinzipschaltbild" gemäß Figur 2).

In einer weiteren Ausgestaltung der Erfindung kann vorgesehen sein, dass z.B. unmittelbar vor einem Abschalten der Baugruppe Anzeigefelder, Anzeigen oder Anzeigebereiche für analoge oder digitale Werte - z.B. getriggert durch eine Spannungsüberwachungs-Einheit ("Spannungswatchdog") in der Baugruppe - durch vorgegebene oder vorgebbare Werte oder Symbole ersetzt werden.

Bei einer einem Signal- oder Dateneingang zugeordneten Anzeige kann die Darstellung eines Eingangswerts z.B. durch ein Fragezeichen oder ähnliches ersetzt werden. Dieses, wie auch die restliche Beschriftung, bleiben auf dem e-Paper nach Abschalten der Spannung wochenlang lesbar. Durch z.B. die Fragezeichen wird beispielsweise symbolisiert, dass die Baugruppe im ausgeschalteten Zustand nicht bestimmen kann, welche Schaltzustände an ihren Eingängen anliegen.

Bei einer Ausgabebaugruppe oder allgemein einem Daten- oder Signalausgang kann beispielsweise auf einem dem oder den Ausgängen zugeordneten Display gemäß der vorliegenden Erfindung z.B. noch während des Zusammenbrechens der Versorgungsspannung der Baugruppe die Belegung von z.B. sogenannten "remanenten Ausgängen" angezeigt werden. Damit kann z.B. ein Bediener einer entsprechenden Anlage, z.B. ein Anlagenfahrer, Inbetrieb- oder Instandsetzer, im ausgeschalteten Zustand des Steuerungsgeräts bzw. der Baugruppe erkennen, welche Werte gleich nach dem Einschalten an den oben genannten Ausgängen anliegen werden.

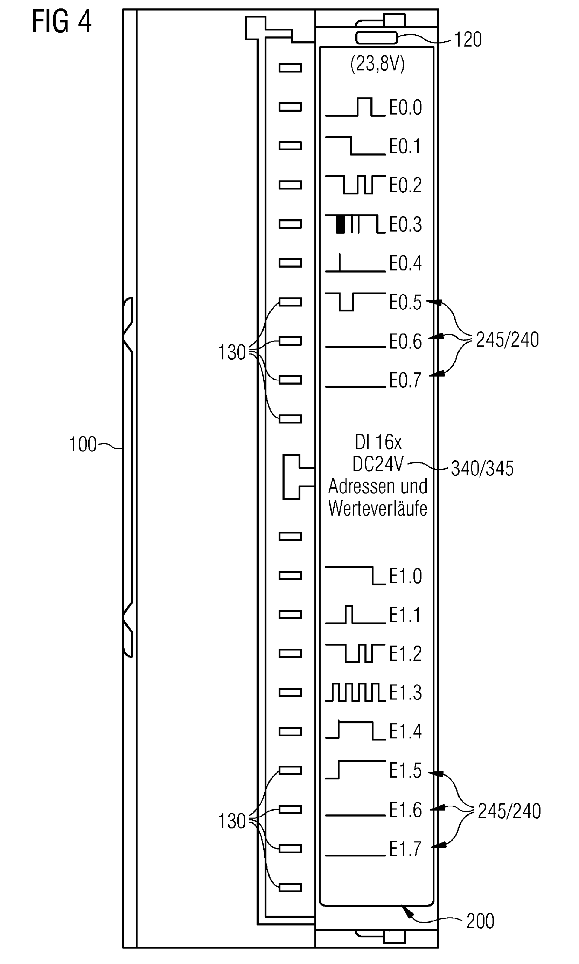

Figur 4 stellt statt der in Figur 3 gezeigten Symbole 230 SPS-Adressen 240 der an den Kontakten 130 angeschossenen oder anzuschliessenden Baugruppen gemäß der Projektierung eines entsprechenden Automatisierungssystems dar. Anstelle einer reinen Zustandsanzeige 235, wie sie in Figur 3 dargestellt ist, sind die jeweils an den Kontakten 130 anliegenden Signale jeweils im zeitlichen Verlauf 245 dargestellt. Diese "Mini-Oszilloskop"-Darstellung 245 kann z.B. Anlagenfahrern, Inbetrieb- oder Instandsetzern in vielen Fällen das zeitaufwändige und fehlerträchtige Anschließen eines "echten" Logik-Analyzers oder Oszilloskops ersparen. Bei analogen Ein- oder Ausgängen bzw. Analogbaugruppen kann eine zugeordnete, entsprechende Anzeige 245 nicht nur die Logikwerte "0" und " 1" visualisieren, sondern analog zu z.B. einem einfachen Mehrkanal-Speicheroszilloskop auch die Zwischenwerte der Ströme und Spannungen an den Anschlussklemmen. Das in der "Mini-Oszilloskop"-Darstellung 245 dargestellte Zeitintervall und die Aktualisierungsrate der Anzeige kann z.B. fest vorgegeben oder auch einstellbar sein. Diese Einstellungen könne z.B. über eine Projektierungseinrichtung gemäß der vorliegenden Erfindung (z.B. ein "Engineeringsystem") erfolgen.

In einem Mittenbereich des Displays 200 werden auch beim in Figur 4 dargestellten Darstellung-Typ wieder entsprechende Beschreibungsinformationen 340, 345 dargestellt, die einen Titel für die angezeigte Darstellung (hier "Adressen" 340 und "Werteverläufe" 345) sowie einen Kurznamen bzw. eine Kurzbeschreibung des Ein-Ausgabe-Moduls 100 (hier "DI 16x" und "DC24V") umfassen.

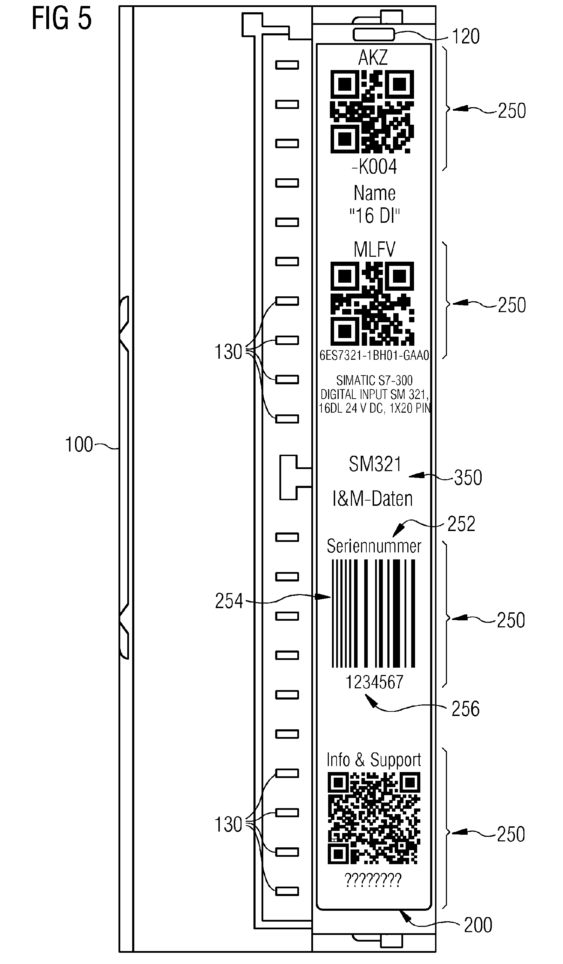

Figur 5 stellt eine Auswahl von sogenannten "I&M"-Daten 250 (I&M: "Identification and Maintenance") der in den vorhergehenden Figuren bereits dargestellten Ein-Ausgabe-Baugruppe 100 auf dem e-Paper-Display 200 grafisch dar. Häufig sind I&M-Daten 250 in den Steuerungsgeräten zwar gespeichert, aber ein Anwender hat oft ohne technische Hilfsmittel keinen unmittelbaren Zugriff auf die Daten. Allgemein ermöglicht es z.B. der Einsatz eines E-Paper-Displays, in einem Steuerungsgerät gespeicherte I&M-Daten ohne zusätzliche Hilfsmittel "in die Außenwelt" zu bringen.

In einem Mittenbereich des Displays 200 werden auch beim in Figur 5 dargestellten Darstellung-Typ wieder entsprechende Beschreibungsinformationen 350 dargestellt, die einen Titel für die angezeigte Darstellung (hier "I&M-Daten" 350) sowie ein Kurznamen des Ein-Ausgabe-Moduls 100 (hier "SM321") umfassen.

Auf der e-Paper-Anzeige 200 sind in Figur 5 jeweils oberhalb und unterhalb des vorstehend beschriebenen Mittenbereichs jeweils zwei I&M-Informationen jeweils in 3-facher Darstellungsweise angezeigt. Dabei wird jede der I&M-Informationen durch einen Kurztitel ("AK2" (=Anlagenkennzeichen),"MLFB" (=Bestellnummer), "Seriennummer", "Info&Support") beschrieben. Darunter folgt jeweils der Inhalt der entsprechenden I&M-Information als maschinenlesbarer Code (Barcode oder QR-Code). Darunter ist zusätzlich noch dieser Inhalt der I&M-Information in einem für einen Benutzer lesbaren und verständlichen Klartext ausgedrückt.

Dabei identifiziert das dargestellte AKZ z.B. die Funktion der Baugruppe in einem Automatisierungssystem und kann auf z.B. einem Tablet-PC oder Mobiltelefon als Einstiegspunkt in ein elektronisches Anlagenmodell dienen. Der entsprechende QR-Code kann beispielsweise mit üblichen Smartphones (mit Kamera) oder dedizierten Barcodescannern gelesen werden und verschiedenste Funktionen (Identifikation, Wartung usw.) auf beispielsweise verbundenen Apps auslösen.

Die dargestellte MLFB identifiziert den Typ der Baugruppe und kann beispielsweise zum Einstieg in ein Bauteile-Informationsportal im Internet verwendet werden.

Unterhalb der MLFB werden die wichtigsten Merkmale der Komponente aufgezählt, was für einen Komponententausch im Rahmen einer Wartung, Reparatur oder eines Umbaus interessant sein kann.

Es folgt in dem bereits oben genannten Mittenbereich ein menschenlesbares Feld 350 mit der Kurzbezeichnung des Typs der Baugruppe.

Als nächstes wird die Seriennummer der Baugruppe in Form eines 1 D-Barcodes und zusätzlich als Klartext angezeigt. Zusammen mit der Typkennzeichnung kann die Seriennummer die Baugruppeninstanz z.B. eindeutig identifizieren, was z.B. viele Asset-Management-Anwendungen, wie beispielsweise die Ersatzteileverwaltung, vereinfacht.

Im untersten Feld stellt das E-Paper-Display einen QR-Code und eine menschenlesbare URL (Uniform Resource Locator) dar, die z.B. auf ein Service-Portal mit wichtigen Produkt- und Service-Informationen zur Baugruppe verlinkt. Dieser http-Link kann z.B. von einem Smartphone mit Webbrowser ohne besondere Zusatzsoftware abgerufen werden.

Es ist ein Vorteil der Verwendung einer solchen e-Paper-Anzeige 200 gegenüber z.B. einem statischen Aufdruck, dass diese Information auch nach Auslieferung der Komponente immer wieder verändert werden kann, beispielsweise automatisch während einer Aktualisierung einer Baugruppenparametrierung, - aktualisierung oder -einstellung.

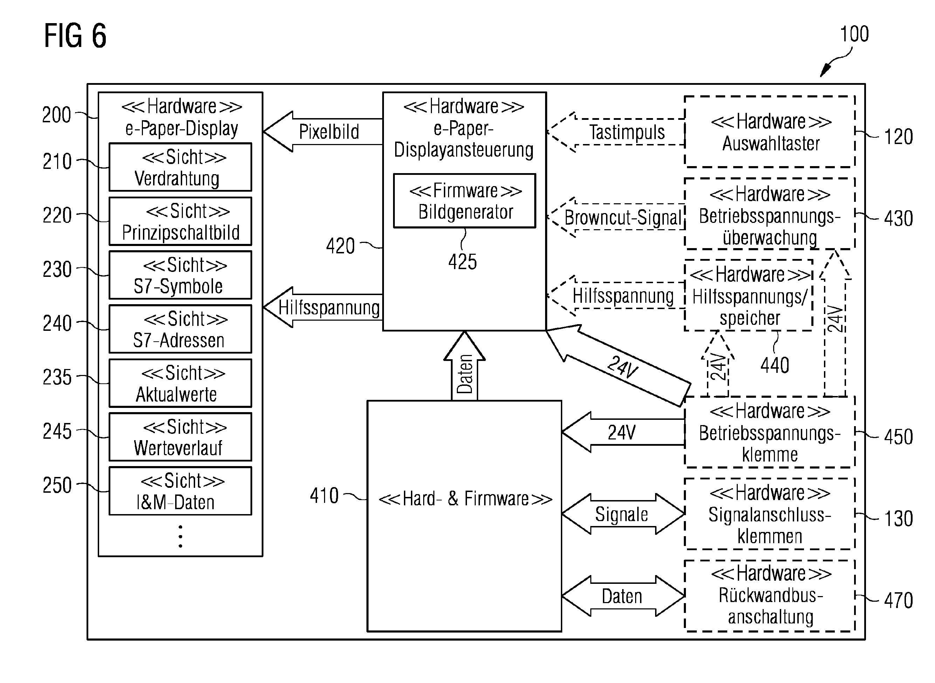

Figur 6 stellt den prinzipiellen Aufbau der in den Figuren 1 bis 5 dargestellten Ein-Ausgabe-Baugruppe 100 dar. Dabei sind in Figur 6 verschiedene Versionen der Baugruppe 100 dargestellt. Dabei sind in einer Basis-Grundversion der Baugruppe 100 nur die mit durchgezogenen Linien umrandeten Komponenten enthalten, während optional einsetzbare Zusatzkomponenten mit gestrichelten Linien umrandet sind. Nachfolgend wird die Baugruppe mit allen dargestellten Komponenten beschrieben. Die Funktionalität von Varianten ohne einzelne oder mehrere der optionalen Komponenten ergibt sich aber logisch aus dieser Beschreibung.

Die in Figur 6 dargestellte Ein-Ausgabe-Baugruppe 100 umfasst die folgenden, bereits in den Figuren 1 bis 5 dargestellten Komponenten: eine e-Paper-Anzeigeeinrichtung ("e-Paper-Display") 200, ein Taster 120 ("Auswahltaster") zum Umschalten der auf dem Display 200 angezeigten Informations-Darstellungen (z.B. gemäß den Figuren 1 bis 5) sowie Anschlusskontakte 130 ("Signalanschluss-Klemmen").

Weiterhin weist die Ein-Ausgabe-Baugruppe 100 Betriebsspannungsklemmen 250 zum Anschluss einer nicht in Figur 6 dargestellten Spannungsversorgung an die Baugruppe 100 auf. Zur Kommunikation mit anderen Modulen über einen Rückwandbus der Speicherprogrammierbaren Steuerung umfasst die Ein-Ausgabe-Baugruppe weiterhin eine Rückwandbusanschaltung 470 auf. Die über den Rückwandbus und/oder die Signalanschlussklemmen 130 mit der Baugruppe 100 ausgetauschten Signale werden in einer Zentraleinheit 410 des Moduls verarbeitet, wobei auf dem e-Paper-Display 200 anzuzeigende Daten dann von dieser Zentraleinheit 410 an eine Display-Steuerung 420 ausgegeben werden.

Innerhalb der Display-Steuerung 420 findet sowohl innerhalb eines Bildgenerators 425 die Umwandlung von Daten in eine entsprechende graphische Darstellungen als auch die Steuerung der Auswahl und Anordnung der auf dem Display 200 darzustellenden Daten statt. Die entsprechenden Pixelbilder werden dann, wie in Figur 6 mittels eines entsprechenden Pfeils angedeutet von der Display-Steuerung 420 an das Display übertragen. Symbolisch sind in Figur 6 innerhalb des Displays 200 die verschiedenen auf dem Display 200 beispielsweise anzeigbaren bzw. angezeigten Daten- bzw. Informationstypen "Verdrahtung" 210, "Prinzipschaltbild" 220, "Symbole" 230, "Adressen" 240, "Aktualwerte 235", "Werteverlauf" 245 sowie "I&M-Daten" 250 gezeigt. Diese Informationen sowie deren Darstellungsmöglichkeiten auf dem Display 200 sind beispielhaft in der vorstehenden Beschreibung mit Bezug auf die Figuren 1 bis 5 näher ausgeführt und beschrieben.

Weiterhin umfasst die Ein-Ausgabe-Baugruppe 100 einen Hilfsspannungsspeicher 440, der z.B. als Kondensator (z.B. "Gold Cap") ausgebildet sein kann. Dieser wird über die Betriebsspannungsklemmen 450 aufgeladen, sobald diese mit einer Betriebsspannung versorgt werden. Im Falle z.B. eines Stromausfalls, eines Abschaltens der Baugruppe bzw. der Speicherprogrammierbaren Steuerung oder allgemein eines Wegfalls der Betriebsspannung von den Klemmen 450, wird die Display-Steuerung 450 zumindest für einige Zeit mit einer Betriebsspannung über den Hilfsspannungsspeicher 440 versorgt. Damit kann z.B. für einige Zeit weiterhin eine Umschaltung der auf dem Display 200 angezeigten Informationen über den Taster 120 gemäß der vorliegenden Beschreibung erfolgen. Weiterhin kann auch nachfolgend dem Betriebsspannungs-Wegfall für die Baugruppe 100 eine entsprechend geänderte Informationsdarstellung gemäß der vorliegenden Beschreibung auf dem Display 200 über die Display-Steuerung 420 eingerichtet werden. Es können dabei z.B. wie beschrieben, z.B. nur ausgewählte Informationen oder auch andere Informationen bzw. Symbole als im "Normalzustand" dargestellt werden.

Über eine Spannung-Überwachungseinheit 430 überwacht die Ein-Ausgabe-Baugruppe 100 kontinuierlich die an den Betriebsspannungs-Klemmen anliegende Spannung. Fällt diese beispielsweise unter einen gewissen Grenzwert oder für eine vorgegebene Zeitspanne unter einen gewissen Grenzwert, so sendet die Spannungsüberwachung 430 ein entsprechendes Warnsignal ("Brownout-Signal") an die Display-Steuerung 420. Innerhalb der Display-Steuerung 420 ist festgelegt (z.B. über ein Projektierungssystem einstellbar bzw. vorgebbar, oder auch dauerhaft festgelegt), welche Daten, Datentypen, Ansichten oder Symbole bei einem derartigen Spannungsausfall auf dem e-Paper-Display 200 angezeigt werden soll. Durch das oben genannte Warnsignal wird dann dieser entsprechende Stromausfalls-Display-Anzeige-Modus in der Display-Steuerung 420 ausgelöst und von dieser gestartet.

Bei vorhandenem Hilfsspannungs-Speicher 440 können dann z.B. die Display-Ansichten, ggf. auch gemäß der vorliegenden Beschreibung eingeschränkte und/oder geänderte Display-Ansichten, auf dem Display 200 angezeigt werden, u.U. auch weiterhin mit dem Taster 120 umschaltbar. Umfasst die Baugruppe 100 keinen gesonderten Hilfsspannungs-Speicher 440, so kann beispielsweise die Display-Steuerung 420 so ausgestaltet sein, dass in jedem Fall auch bei einem spontanen Betriebsspannungsausfall noch eine vorgegebene oder vorgebbare Ausschalt-Informationsansicht von der Displaysteuerung 420 an das Display 200 ausgegeben und dort angezeigt wird.

Nachfolgend werden noch einige weitere Ausgestaltungsmöglichkeiten der in den Figuren, insbesondere Figur 6, dargestellten Ein-Ausgabe-Baugruppe beschrieben.

### Normalbetrieb mit 24V-Versorgung

Die Betriebsspannungsklemmen 450 versorgen die Zentraleinheit 410 und die e-Paper-Displayansteuerung 420 mit Betriebsspannung und laden einen Superkondensator des Hilfsspannungsspeichers 440. Drückt der Anwender den Auswahltaster 120, wechselt die e-Paper-Displayansteuerung 420 die angezeigte Sicht auf dem e-Paper-Display 200. Je nach Sicht visualisiert die e-Paper-Displayansteuerung 420 die von der "klassischen" Zentraleinheit 410 gelieferten Daten.

### Betriebsspannungsausfall

Bricht die 24V-Betriebsspannung zusammen, wird dies von der Betriebsspannungsüberwachung 430 erkannt, die ein sogenanntes "Brownout-Signal" (ein Warnsignal) an die Displayansteuerung 420 schickt. Die Displayansteuerung 420 wechselt die Ausgabe auf eine vom Anwender gewünschte vorprojektierte bzw. voreingestellte oder auch fest vorgegebene Ausschalt-Sicht. Die Signaleingängen der Baugruppe 100 zugeordneten Anzeigen in der Ausschalt-Sicht werden auf "unbekannt" gesetzt. Beinhaltet die gewählte Ausschalt-Sicht remanenten Ausgängen zugeordnete Anzeigen, so wird der über diese Ausgänge nach dem Wiedereinschalten ausgegebene Wert, z.B. in einer besonders gekennzeichneten Art (z.B. in Klammern), dargestellt.

Allgemein können vor Abschalten eines erfindungsgemäße Steuerungsgeräts (z.B. einer im Rahmen der Figurenbeschreibung beispielhaft genannten Ein-Ausgabe-Baugruppe 100) z.B. Eingangs-Signal-Anzeigefelder durch Fragezeichen ersetzt werden. Dies kann z.B., wie vorstehend beschrieben, durch eine Spannungsüberwachungs-Einheit des Steuerungsgeräts (bzw. der Baugruppe 100) ("Spannungswatchdog") getriggert werden. Diese wie auch die restliche Beschriftung bleiben auf dem e-Paper nach Abschalten der Spannung ggf. wochenlang lesbar. Durch die Fragezeichen wird symbolisiert, dass die Baugruppe im ausgeschalteten Zustand nicht bestimmen kann, welche Schaltzustände an ihren Eingängen anliegen.

Auf z.B. Ausgabebaugruppen oder bei vorhandenen Signal-Ausgängen kann auf dem zugeordneten Display bzw. den Signal-Ausgängen zugeordneten Display-Bereich z.B. während des Zusammenbrechens einer Versorgungsspannung der Baugruppe beispielsweise die Belegung sogenannter "remanenter Ausgänge" angezeigt werden. Auf diese Weise kann beispielsweise ein Bediener (z.B. ein Inbetrieb- oder Instandsetzer für eine Anlage) im ausgeschalteten Zustand der Baugruppe bereits erkennen, welche Werte gleich nach dem Einschalten an den Ausgängen anliegen werden.

Es kann allgemein weiterhin vorgesehen sein, dass erfindungsgemäße Steuergeräte einen Energiespeicher (Kondensator, Akku) oder eine Energiequelle (Batterie) aufweisen, welche auch z.B. bei einem ungeplanten, spontanen Stromausfall noch die hier beschriebenen Anzeige-Optionen auf dem Display ermöglichen. Hierzu kann z.B. auch der gleiche Energiespeicher verwendet werden, wie er in der vorliegenden Beschreibung im Zusammenhang mit einem Umschalten der Anzeige nach Abschalten des Steuerungsgeräts, z.B. der Baugruppe 100, bzw. einem Stromausfall beschrieben wird.

### Minimalbetrieb mit Hilfsspannung

Drückt der Anwender im in den Figuren dargestellten Ausführungsbeispiel den Auswahltaster 120, dann schaltet die e-Paper-Displayansteuerung 420 mit der verbleibenden Hilfsspannung eine Auswahl von Sichten des e-Paper-Displays 200 durch, die ohne Versorgungsspannung Sinn machen, wie beispielsweise Verdrahtung 210, Prinzipschaltbild 220, Symbole 230 usw. - z.B. aber keine Aktualwerte-Sicht 235.

Die vorliegende Erfindung beschreibt unter anderem den Einsatz einer elektronischen, permanenten Anzeigeeinrichtung, beispielsweise eines ePaper-Displays beispielsweise anstelle von heute verwendeten Papiereinlegern zur Darstellung verschiedener Informationen wie z.B. der Kontaktbelegung eines Steuerungsgeräts (z.B. einer Ein-Ausgabe-Baugruppe für eine Speicherprogrammierbare Steuerung) auch nach Trennung der Baugruppe von einer Betriebsspannung.

Durch verschiedene Ausgestaltung gemäß der vorliegenden Beschreibung lassen sich beispielsweise die folgenden Vorteile erreichen:
- Vereinfachung von Inbetriebnahme, Wartung, Instandsetzung und Asset-Tracking durch Sichtbarmachen elektronischer Baugruppen- oder Gerätedaten sowie die automatisch gewährleistete Übereinstimmung von Beschriftung des Steuerungsgeräts und einer entsprechenden Anlagen-Projektierung;
- Verringerung der Produktkomplexität beispielsweise durch Wegfall von bislang bei derartigen Geräten verwendeten Status-LEDs.

Dabei können im Rahmen verschiedener Ausgestaltungen unter anderem gegebenenfalls auch die folgenden Auswirkungen erzielt werden:
- Anzeige einer Klemmenbelegung von Anschlusskontakten eines Steuerungsgeräts: Anzeige von entsprechenden Signalen, Symbolen, verbundenen Komponenten;
- Analog- und Digitalwerte an derartigen Klemmen werden in Diagrammform analog zu einem Speicheroszilloskop dargestellt;
- auf Steuerungsgeräten gespeicherte I&M-Daten (Identification-and-Maintenance-Daten) werden als Texte, 1D- und/oder 2D-Codes sichtbar.

Dabei kann die Erfindung vorteilhaft z.B. auch bei konfigurierbaren elektronischen Steuerungssystemen mit Anschlussklemmen und elektronischen Typdaten, wie z.B. Controllern, Frequenzumrichtern und E/A-Baugruppen, eingesetzt werden.

## Patentansprüche

1. Elektronisches Steuerungsgerät (100) zur Steuerung einer Anlage,
wobei das elektronische Steuerungsgerät (100)
- eine Anzeigeeinrichtung (200), sowie
- eine Schnittstelle (130) zum Eingang eines elektrischen oder elektronischen Signals von einer Komponente der gesteuerten Anlage und/oder zur Ausgabe eines elektrischen oder elektronischen Signals an eine Komponente der gesteuerten Anlage
umfasst,
**dadurch gekennzeichnet,**
**dass** die Anzeigeeinrichtung (200) als elektronische, permanente Anzeigeeinrichtung (200) ausgebildet und eingerichtet ist, und
**dass** das elektronische Steuerungsgerät (100) weiterhin
- zum Empfang und zur Speicherung einer von einer Projektierungseinrichtung zur Projektierung des Steuerungsgeräts und/oder der Anlage auf das elektronische Steuerungsgerät (100) übertragenen oder übertragbaren Komponenten-Information (210, 230, 235, 240, 245) bezüglich einer mit der Schnittstelle (130) zu verbindenden oder verbundenen Komponente der Anlage, und
- zur Anzeige dieser Komponenten-Information (210, 230, 235, 240, 245) auf der Anzeigeeinrichtung (200) ausgebildet und eingerichtet ist, und
**dass** weiterhin bei einem Wegfall einer Anzeigen-Betriebsspannung zum Betrieb der Anzeigeeinrichtung (200) eine bei diesem Wegfall der Anzeigen-Betriebsspannung auf der Anzeigeeinrichtung (200) angezeigte Komponenten-Information (210, 230, 235, 240, 245) auch nach dem Wegfall der Anzeigen-Betriebsspannung angezeigt bleibt.

2. Elektronisches Steuerungsgerät gemäß Anspruch 1, **dadurch gekennzeichnet,**
**dass** das Steuerungsgerät (100) weiterhin zur Anzeige einer Schnittstellen-Information (220, 235, 245) bezüglich der Schnittstelle (130) und/oder eines über die Schnittstelle (130) ausgegebenen oder empfangenen elektrischen oder elektronischen Signals auf der Anzeigeeinrichtung (200) ausgebildet und eingerichtet ist, und
**dass** bei einem Wegfall der Anzeigen-Betriebsspannung zum Betrieb der Anzeigeeinrichtung (200) eine bei diesem Wegfall der Anzeigen-Betriebsspannung auf der Anzeigeeinrichtung (200) angezeigte Schnittstellen-Information auch nach dem Wegfall der Anzeigen-Betriebsspannung angezeigt bleibt.

3. Elektronisches Steuerungsgerät gemäß Anspruch 1 oder 2, **dadurch gekennzeichnet,**
**dass** die Schnittstelle (130) des Steuerungsgeräts (100) ein Verbindungselement (130) zum Anschluss der mit der Schnittstelle zu verbindenden oder verbundenen Komponente der Anlage umfasst, und
**dass** die Anzeigeeinrichtung (200) zumindest abschnittsweise in räumlicher Nähe zum Verbindungselement (130) angebracht ist.

4. Elektronisches Steuerungsgerät gemäß Anspruch 3, **dadurch gekennzeichnet,**
**dass** das Steuerungsgerät (100) derart ausgebildet und eingerichtet ist, dass die Anzeige der Komponenten-Information (210, 230, 235, 240, 245) und/oder der Schnittstellen-Information (220, 235, 245) auf der Anzeigeeinrichtung in räumlicher Nähe zum Verbindungselement (130) erfolgt, insbesondere bei einer bestimmungsgemäßen Benutzung des Verbindungselements (130) durch einen Benutzer die Komponenten-Information (210, 230, 235, 240, 245) und/oder Schnittstellen-Information (220, 235, 245) für den Benutzer in räumlicher Nähe zum Verbindungselement (130) sichtbar ist.

5. Elektronisches Steuerungsgerät nach einem der vorhergehenden Ansprüche,
**dadurch gekennzeichnet,**
**dass** das Steuerungsgerät (100) weiterhin zur Anzeige einer Geräte-Information (310, 320, 335, 335, 340, 345, 250, 252, 254, 256, 350) bezüglich des Steuerungsgeräts (100) auf der Anzeigeeinrichtung (200) ausgebildet und eingerichtet ist, und
**dass** bei einem Wegfall der Anzeigen-Betriebsspannung zum Betrieb der Anzeigeeinrichtung (200) eine bei diesem Wegfall der Anzeigen-Betriebsspannung auf der Anzeigeeinrichtung (200) angezeigte Geräte-Information (310, 320, 335, 335, 340, 345, 250, 252, 254, 256, 350) auch nach dem Wegfall der Anzeigen-Betriebsspannung angezeigt bleibt.

6. Elektronisches Steuerungsgerät nach einem der vorhergehenden Ansprüche,
**dadurch gekennzeichnet,**
**dass** das Steuerungsgerät (100) zur Ausgabe einer im Steuerungsgerät gespeicherten Komponenten- (210, 230, 235, 240, 245), Schnittstellen- (220, 235, 245) und/oder Geräte-Information (310, 320, 335, 335, 340, 345, 250, 252, 254, 256, 350) auf der Anzeigeeinrichtung (200) in einem für einen Benutzer lesbaren Textformat (252, 256) und/oder als maschinenlesbarer Code (254) ausgebildet und eingerichtet ist.

7. Elektronisches Steuerungsgerät nach einem der vorhergehenden Ansprüche,
**dadurch gekennzeichnet,**
**dass** das Steuerungsgerät (100) eine Energiequelle oder Energie-Speichereinrichtung (440) für die Anzeigeeinrichtung (200) umfasst und derart ausgebildet und eingerichtet, dass nach einem Wegfall einer für einen regulären Betrieb des Steuerungsgeräts (100) erforderlichen Geräte-Betriebsspannung die Anzeigeeinrichtung (200) weiterhin zumindest für einen Zeitraum mit elektrischer Energie durch die Energiequelle oder Energie-Speichereinrichtung (440) versorgt wird.

8. Elektronisches Steuerungsgerät nach einem der vorhergehenden Ansprüche,
**dadurch gekennzeichnet,**
**dass** das Steuerungsgerät (100) ein Bedienelement (120) umfasst, wobei das Steuerungsgerät (100) derart ausgebildet und eingerichtet ist, dass durch ein Betätigen des Bedienelements (120) ein Umschalten von der Anzeige einer ersten Komponenten- (210, 230, 235, 240, 245), Schnittstellen- (220, 235, 245) und/oder Geräte-Information (310, 320, 335, 335, 340, 345, 250, 252, 254, 256, 350) auf der Anzeigeeinrichtung (200) zur Anzeige einer zweiten Komponenten- (210, 230, 235, 240, 245), Schnittstellen- (220, 235, 245) und/oder Geräte-Information (310, 320, 335, 335, 340, 345, 250, 252, 254, 256, 350) auf der Anzeigeeinrichtung (200) erfolgt.

9. Elektronisches Steuerungsgerät nach Anspruch 7 und 8,
**dadurch gekennzeichnet,**
**dass** das Steuerungsgerät (100) derart ausgebildet und eingerichtet ist, dass nach einem Wegfall der für einen Betrieb des Steuerungsgeräts (100) erforderlichen Geräte-Betriebsspannung weiterhin vermittels des Bedienelements (120) ein Umschalten von der Anzeige einer ersten Information gemäß Anspruch 8 auf eine zweite Information gemäß Anspruch 8 vermittels des Bedienelements (120) zumindest für einen Zeitraum erfolgen kann.

10. Elektronisches Steuerungsgerät nach einem der vorhergehenden Ansprüche,
**dadurch gekennzeichnet,**
**dass** im Steuerungsgerät (100) eine vorgegebene oder vorgebbare Ausschalt-Ansicht für die Anzeigeeinrichtung (200) gespeichert ist, wobei das Steuerungsgerät (100) weiterhin derart ausgebildet und eingerichtet ist, dass bei einem Wegfall einer Geräte-Betriebsspannung zum bestimmungsgemäßen Betrieb des Steuerungsgeräts (100) die in der Ausschalt-Ansicht angegebenen Informationen auf der Anzeigeeinrichtung (200) angezeigt werden.

11. Elektronisches Steuerungsgerät nach einem der vorhergehenden Ansprüche,
**dadurch gekennzeichnet,**
**dass** das Steuerungsgerät (100) eine Spannungsüberwachungs-Einrichtung (430) zur Überwachung der Geräte-Betriebsspannung und/oder der Anzeigen-Betriebsspannung umfasst.

12. Verfahren zum Betrieb eines Steuerungsgeräts gemäß einem der Ansprüche 1 bis 11,
**gekennzeichnet durch** die Schritte:
- Empfangen und Speichern einer Komponenten-Information (210, 230, 235, 240, 245) bezüglich einer mit der Schnittstelle (130) des Steuerungsgeräts (100) zu verbindenden oder verbundenen Komponente der Anlage von der Projektierungseinrichtung;
- Anzeigen der Komponenten-Information (210, 230, 235, 240, 245) auf der Anzeigeeinrichtung (200).

13. Verfahren nach Anspruch 12,
**gekennzeichnet durch** die weiteren Schritte:
- Anzeigen einer ersten Komponenten- (210, 230, 235, 240, 245), Schnittstellen- (220, 235, 245) und/oder Geräte-Information (310, 320, 335, 335, 340, 345, 250, 252, 254, 256, 350) auf der Anzeigeeinrichtung (200),
- Betätigen eines Bedienelements (120) des Steuerungsgeräts (100) gemäß Anspruch 8,
- Anzeigen einer zweiten Komponenten- (210, 230, 235, 240, 245), Schnittstellen- (220, 235, 245) und/oder Geräte-Information (310, 320, 335, 335, 340, 345, 250, 252, 254, 256, 350) auf der Anzeigeeinrichtung (200).

14. Verfahren nach Anspruch 12 oder 13,
**gekennzeichnet durch** die weiteren Schritte:
- Feststellung eines Spannungsverlusts bei einer Geräte-Betriebsspannung zum bestimmungsgemäßen Betrieb des Steuerungsgeräts (100)
oder
- Feststellung eines Ausschalt-Signals bezüglich eines Ausschaltens des Steuerungsgeräts (100),
dann
- Anzeige der Informationen gemäß einer im Steuerungsgerät (100) gespeicherten Ausschalt-Ansicht auf der Anzeigeeinrichtung (200).

15. Verfahren nach Anspruch 14,
**gekennzeichnet durch** die den Schritten gemäß Anspruch 14 vorausgehenden Schritte:
- Empfang von Daten bezüglich einer Ausschalt-Ansicht von der Projektierungseinrichtung oder Empfang einer Ausschalt-Ansicht von der Projektierungseinrichtung,
- Speichern der Ausschalt-Ansicht im Steuerungsgerät (100).
